# NEUE EUROPÄISCHE PATENTSCHRIFT

(11) **EP 2 356 005 B2**
(45) Veröffentlichungstag und Bekanntmachung des Hinweises auf die Entscheidung über den Einspruch: **17.11.2021**
(45) Hinweis auf die Patenterteilung: 21.02.2018
(21) Anmeldenummer: 09777770.0
(22) Anmeldetag: 08.08.2009
(51) Int. Cl.: B60T 17/00, B60T 17/22

(54) **STEUERINRICHTUNG FÜR EINE DRUCKLUFTAUFBEREITUNGSEINRICHTUNG EINES FAHRZEUGES, DRUCKLUFTAUFBEREITUNGSEINRICHTUNG, -FAHRZEUGSYSTEM, -FAHRZEUG SOWIE VERFAHREN ZU DEREN STEUERUNG**
CONTROL DEVICE FOR A COMPRESSED AIR PREPARATION DEVICE OF A VEHICLE, COMPRESSED AIR PREPARATION DEVICE, VEHICLE SYSTEM, VEHICLE, AND METHOD FOR CONTROLLING THE SAME
DISPOSITIF DE COMMANDE POUR UN ÉQUIPEMENT DE TRAITEMENT D'AIR COMPRIMÉ D'UN VÉHICULE, ÉQUIPEMENT DE TRAITEMENT D'AIR COMPRIMÉ, SYSTÈME DE VÉHICULE, VÉHICULE ET PROCÉDÉ DE COMMANDE

(30) Priorität: 07.11.2008 DE 102008056322
(43) Veröffentlichungstag der Anmeldung: 17.08.2011
(73) Patentinhaber: ZF CV Systems Hannover GmbH, 30453 Hannover (DE)
(72) Erfinder: DIEKMEYER, Heinrich, 30890 Barsinghausen (DE); PENDZICH, Kevin, 30161 Hannover (DE); REINHARDT, Joachim, 30455 Hannover (DE); STRACHE, Wolfgang, 30966 Hemmingen (DE)
(74) Vertreter: Lüdtke, Thomas
(86) Internationale Anmeldenummer: PCT/EP2009/005778
(87) Internationale Veröffentlichungsnummer: WO 2010/051868

(56) Entgegenhaltungen:
- EP-A1- 1 529 704
- EP-B1- 1 414 687
- WO-A-2005/082675
- WO-A-2006/071170
- WO-A-2009/010199
- DE-A1-102004 059 834
- DE-A1-102004 059 835
- DE-A1-102007 032 963
- DE-A1-102008 006 860
- US-A- 6 036 449

## Beschreibung

Die Erfindung betrifft eine Steuereinrichtung für eine Druckluftaufbereitungseinrichtung eines Fahrzeuges, eine entsprechende Druckluftaufbereitungseinrichtung sowie ein Verfahren zum Steuern der Druckluftaufbereitungseinrichtung.

Eine Druckluftaufbereitungseinrichtung eines Fahrzeuges, insbesondere eines Nutzfahrzeuges, wird im Allgemeinen an einen Kompressor angeschlossen, der direkt vom Motor angetrieben wird. Der Kompressor kann direkt auf der Motorwelle angeordnet sein und somit bei drehendem Motor immer betrieben werden oder an den Motor über eine Kupplung angekoppelt sein. Der Kompressor fördert in Förderphasen Druckluft, die zunächst durch einen Lufttrockner gelangt, der im Allgemeinen als Trocknungsmittel ein Trockengranulat aufweist und gegebenenfalls zusätzlich eine Reinigung durchführen kann. Die geförderte, getrocknete Druckluft wird nachfolgend in einem Druckluftspeicher gespeichert und kann an Verbraucherkreise abgegeben werden, die z.B. Bremsregelkreise pneumatischer Bremssysteme und/oder pneumatische Niveauregulierungen mit Luftbälgen sein können. Hierbei können die einzelnen Verbraucherkreise zunächst wiederum Druckluftspeicher aufweisen.

In einer Förderphase bzw. Füllphase wird somit der Feuchtegehalt des Lufttrockners erhöht; um eine Übersättigung des Trocknungsmittels zu vermeiden und dessen Feuchtegrad wieder abzusenken, wird in Regenerationsphasen ein Teil der im Druckluftspeicher gespeicherten, trockenen Druckluft wieder über den Lufttrockner zurückgeleitet und die so mit Feuchtigkeit versetzte Druckluft z. B. an die Umgebung abgegeben. Diese Regenerationsphasen erfolgen im Allgemeinen direkt anschließend an eine Förderphase, so dass für die Regeneration immer eine feste Luftmenge oder ein bestimmter Anteil der zuvor geförderten Luftmenge verwendet wird. Die Einleitung dieser Regenerationsphasen kann rein mechanisch oder auch elektrisch durch die Steuereinrichtung erfolgen.

Durch den Einsatz des Lufttrockners kann somit das Druckluftsystem vor schädlicher Feuchtigkeit, insbesondere auch einer Kondensation über Nacht und gegebenenfalls dem Einfrieren der aufgenommenen Feuchtigkeit mit entsprechenden Folgeschäden bewahrt werden.

Da die Förderphase mit einem Kraftstoffverbrauch des Motors verbunden ist, wird in den Regenerationsphasen jeweils eine gewisse Energiemenge bzw. ein entsprechender Anteil des zuvor eingesetzten Kraftstoffs verbraucht. Bei unterschiedlichen Belastungszuständen, insbesondere auch bei einem erhöhten Druckluftverbrauch und somit längeren Förderphasen sind jeweils gegebenenfalls zwischendurch Regenerationsphasen einzuschieben, was insbesondere bei längeren Nutz- und Förderphasen nachteilhaft ist. DE102004059835 A1, DE102004059834 A1, WO2006071170 A1, und WO2005082675 A1 zeigen jeweils keine vom Motorauslastung und/ oder Druckluftverbrauch geregelten Steuerung in den Regenerationsphasen, sondern in diesen Dokumenten wird in den Förderphasen geregelt. Die EP 1 183 172 B1 beschreibt ein Druckluftbremssystem, bei dem in Schubphasen, in denen die Bewegungsenergie des Fahrzeugs den Motor und den angeschlossenen Kompressor antreibt, der Druckluftspeicher über den gewöhnlichen Sollwert hinaus geladen wird, da diese zusätzliche Druckluftförderung ohne Kraftstoffmehrverbrauch erfolgt. Somit können die Förderphasen, bei denen der Motor unter Kraftstoffverbrauch den Kompressor antreibt, im entsprechenden Umfang verkürzt oder vermieden werden, so dass der gesamte Kraftstoffverbrauch verringert werden kann. DE 10 2005 005 002 A1 beschreibt eine Vorrichtung und ein Verfahren, bei dem in Abhängigkeit von einer Belastung des Antriebsmotors, der Energieverbrauch eines Aggregats verstellt wird, wobei der Vorratstank bei einer Druckluftbremse bei Bergabfahrt auf jeden Fall immer auf einen oberen Druckwert aufgefüllt wird. EP 1 414 687 B1 beschreibt eine Vorrichtung und ein Verfahren, bei dem die Förderphasen und Regenerationsphasen in Abhängigkeit einer aktuellen Motorauslastung und eines aktuellen Druckluftverbrauchs eingestellt werden.

Der Erfindung liegt die Aufgabe zugrunde, eine Steuereinrichtung für eine Druckluftaufbereitungseinrichtung, eine derartige Druckluftaufbereitungseinrichtung, ein Fahrzeugsystem mit einer Druckluftaufbereitungseinrichtung sowie ein entsprechendes Verfahren zum Betreiben einer derartigen Druckluftaufbereitungseinrichtung zu schaffen, mit denen ein relativ geringer Kraftstoffverbrauch erreicht werden kann und eine angemessene Druckluftmenge zur Verfügung gestellt wird.

Diese Aufgabe wird durch eine Steuereinrichtung nach Anspruch 1, eine Druckluftaufbereitungseinrichtung nach Anspruch 14, ein Fahrzeugsystem nach Anspruch 15, ein Fahrzeug nach Anspruch 16 und ein Verfahren nach Anspruch 17 gelöst. Die Unteransprüche beschreiben bevorzugte Weiterbildungen.

Erfindungsgemäß kann somit ein Management der Motorauslastung und/oder der Drucklufterzeugung durchgeführt werden, in das die Regenerationsphasen einbezogen werden.

Ein Management der Motorauslastung berücksichtigt insbesondere den Kraftstoffverbrauch und kann somit Phasen mit geringerem und höherem Kraftstoffverbrauch (pro Wegstrecke) ermitteln; in Phasen mit geringerer Motorauslastung kann das Trocknungsmittel übermäßig getrocknet werden, d.h. auf einen geringeren Soll-Feuchtegrad eingestellt werden, so dass in Phasen mit höherer Motorauslastung keine zusätzliche Belastung des Motors für die Regeneration erforderlich ist.

Insbesondere können bei diesem Management der Motorauslastung Schubphasen des Motors, d.h. Phasen, in denen bei eingekuppeltem Motor das durch die Bewegungsenergie des Fahrzeuges erzeugte Motormoment größer ist als das vom Fahrer über das Gaspedal angeforderte Motormoment, dazu benutzt werden, um über den Motor und den Kompressor Druckluft zu fördern und im Druckluftspeicher abzuspeichern, so dass anschließend ein Teil dieser zusätzlich geförderten Druckluft zur Regeneration des Trocknungsmittels verwendet werden kann. Somit kann die in Schubphasen ohne zusätzlichen Kraftstoffverbrauch zur Verfügung stehende Energie nicht nur zur zusätzlichen Druckluftspeicherung, sondern auch für eine übermäßige Trocknung des Lufttrockners eingesetzt werden.

Der Erfindung liegt hierbei die Erkenntnis zugrunde, dass sich in einer Schubphase ein Teil der Bewegungsenergie des Fahrzeuges in einer übermäßigen Trocknung des Trocknungsmittels des Lufttrockners speichern lässt, da ansonsten die Trocknung des Trocknungsmittels mit einem gewissen Kraftstoffverbrauch verbunden ist.

Erfindungsgemäß kann hierbei die übermäßige Regeneration nicht nur in oder nach einer Schubphase durchgeführt werden, sondern auch vor der Schubphase, wenn diese vorab bekannt ist. Somit wird gegebenenfalls der Druckluftspeicher durch eine zusätzliche Regenerationsphase bis unter den ansonsten relevanten Solldruck geleert (z. B. bis oberhalb eines minimalen Reserve-Wertes), da nachfolgend in der Schubphase eine kostengünstige Auffüllung möglich ist.

Durch die gezielte Planung der Drucklufterzeugung können Streckenabschnitte der Wegstrecke mit höherem Druckluftverbrauch vorab bestimmt werden und vorab eine übermäßige Regeneration und gegebenenfalls ergänzend eine Auffüllung des Druckluftspeichers auf einen höheren Solldruck durchgeführt werden, um anschließend längere Förder- und Nutzphasen zu ermöglichen.

Vorzugsweise kann eine Regelung auf einen Soll-Feuchtegrad durchgeführt werden, wobei der Soll-Feuchtegrad von der Steuereinrichtung ermittelt wird und ein Ist-Wert bzw. aktueller Wert entweder durch ein Messsignal eines Feuchtesensors direkt ermittelt oder aus den Zeitdauern der letzten Förderphasen und Regenerationsphasen indirekt ermittelt bzw. abgeschätzt wird. Bei einer derartigen Regelung können somit von der Steuereinrichtung die Soll-Feuchtegrade in Abhängigkeit der zukünftigen Werte der Motorauslastung oder des Druckluftverbrauchs festgesetzt werden.

Erfindungsgemäß kann somit Kraftstoff eingespart werden. Weiterhin sind längere Förderphasen bzw. auch länger andauernde Nutzphasen und ein höherer Luftverbrauch mit wenigeren oder kürzeren Regenerationsphasen möglich. Hierdurch können die Regenerationsphasen hinausgezögert oder verkürzt werden. Dies führt unter anderem zu einem ruhigeren Regelungsverhalten und selteneren Schaltvorgängen, insbesondere werden auch längere Förderphasen ermöglicht. Weiterhin können die Bauteile gegebenenfalls kleiner dimensioniert werden.

Die Streckenabschnitte mit unterschiedlichem Druckluftverbrauch und/oder unterschiedlicher Motorauslastung können bereits vorab ermittelt werden. Dies kann zum einen aus Kartendaten bzw. Streckendaten über die vorausliegende Fahrtroute sowie Positionsdaten erfolgen, wobei die Positionsdaten z.B. durch ein globales Positionsbestimmungssystem (GPS) und/oder einen Wegstreckenzähler (Kilometerzähler) des Fahrzeugs gebildet werden können. Somit werden Streckenprofile bzw. streckenabhängige Förderprofile und/oder streckenabhängige Verbrauchsprofile der Druckluft erstellt. Diese Erstellung kann ergänzend oder alternativ zur Ermittlung aus Kartendaten auch als adaptive bzw. selbstlernende Ermittlung erfolgen, wenn das Fahrzeug die betreffende Strecke mehrmals fährt, z.B. bei einem Linienbus oder einem shuttle-mäßig zwischen zwei festen Punkten eingesetzten Lastwagen. Grundsätzlich können adaptive Systeme nicht nur bei identischen, sondern auch ähnlichen Fahrtstrecken gebildet werden, wozu die ermittelten Streckenprofile miteinander verglichen und qualitativ bewertet werden können.

Die Streckenprofile können nicht nur der jeweiligen Strecke, sondern ergänzend auch Zeitdaten zugeordnet werden, insbesondere Tageszeiten, um die unterschiedliche Verkehrsbelastung an den verschiedenen Tageszeiten, insbesondere morgens, mittags, nachmittags, abends und nachts festzulegen. Ergänzend können z.B. auch Wochentage festgelegt werden. Weiterhin können die ermittelten Streckenprofile durch entsprechende Mittelwertbildung fortlaufend aktualisiert werden, um auch vorübergehende Änderungen durch z.B. Baustellen, Behinderungen etc. zu berücksichtigen.

Erfindungsgemäß kann somit ein Fahrzeugenergiemanagementsystem gebildet werden, dass jeweils aktuell und flexibel den Energieverbrauch optimieren kann.

Die erfindungsgemäße Steuereinrichtung führt eine Umschaltung auf eine Regenerationsphase oder die Verlängerung einer bestehenden Regenerationsphase durch, indem sie entsprechende Steuersignale ausgibt, insbesondere an die Ventileinrichtungen zur Einstellung der jeweiligen Phasen. Das erfindungsgemäße Verfahren entspricht der Anwendung der erfindungsgemäßen Steuereinrichtung.

Ein Vorteil der Erfindung ist es, dass kommende vorbekannte Fahrzeugzustände mit erhöhten Luftverbrauch, z.B. Absatteln, Rangieren, Haltestellen mit bereits überregenierten Trocknungsmittel angefahren werden können, so dass diese Situationen nicht durch das Regenerieren des Trocknungsmittels behindert oder verzögert werden. Dadurch wird die Druckluftversorgung verbessert und damit die Fahrzeugmanöverzeit verringert und/oder der Fahrzeughersteller kann das Fahrzeug mit kleineren Druckspeichern ausstatten und damit Kosten und Platz am Fahrzeugrahmen einsparen.

Die Erfindung wird im Folgenden anhand der beiliegenden Zeichnungen an einigen Ausführungsformen erläutert. Es zeigen:
- Fig. 1: ein Blockdiagramm einer erfindungsgemäßen Luftaufbereitungsanlage;
- Fig. 2: die Darstellung eines Fahrzeugs auf einer Fahrstrecke;

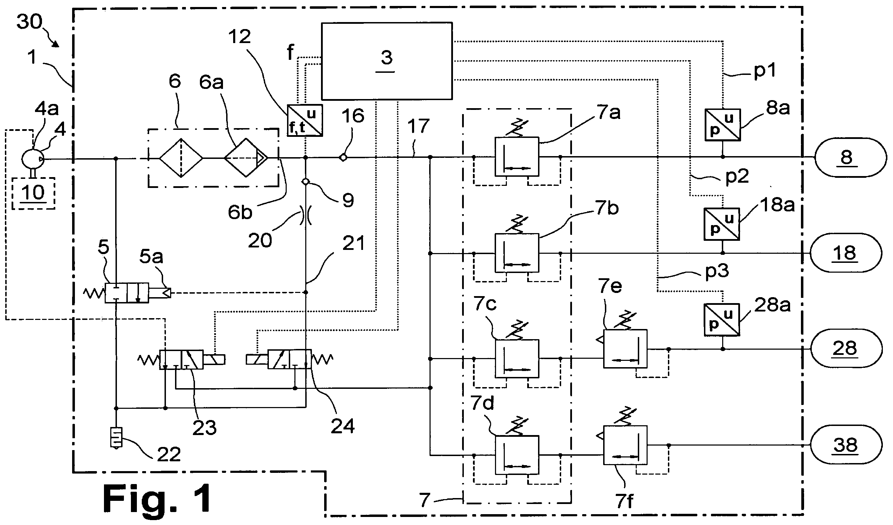

Eine Druckluftaufbereitungseinrichtung 1 eines Nutzfahrzeuges 2 mit Fahrzeugmotor 10 und pneumatischen Bremsen und Luftfedern weist gemäß Fig. 1 eine elektronische Steuereinrichtung 3 auf, die direkt oder indirekt den Betriebszustand eines vom Motor 10 angetriebenen Kompressors 4 steuert. Der Kompressor 4 kann z.B. direkt auf der Motorwelle angeordnet sein und vom Fahrzeugmotor 10 direkt angetrieben werden, oder über eine Kupplung vom Fahrzeugmotor 10 angetrieben werden. Somit kann z. B. eine Ein- und Auskupplung des Kompressors 4 vom Motor 10 oder bei einer starren Kopplung des Kompressors 4 am Motor 10 ein Leerlauf ohne Druckluftförderung eingestellt werden.

An den Ausgang des Kompressors 4 ist ein Lufttrockner 6 angeschlossen, in dem ein Trocknungsmittel 6a, z. B. ein Trocknungsgranulat, aufgenommen ist. Am Ausgang 6b des Lufttrockners 6 ist über ein Rückschlagventil 16 ein Druckluft-Förderpfad 17 mit einem Vierkreis-Schutzventil 7 angeschlossen, das z. B. vier Überströmventile7a, 7b, 7c, 7d aufweist und an das wiederum Druckluftspeicher 8, 18, 28, 38 der vier angeschlossenen Verbraucherkreise angeschlossen sind; hierbei ist z. B. der Behälter 8 für einen Betriebsbremskreis I, der Behälter 18 für einen Betriebsbremskreis II, der Behälter 28 für einen Anhängerbremskreis und/oder einen Feststellbremskreis und der Behälter 38 für einen Nebenverbraucherkreis vorgesehen. Vor den Behältern 28 und 38 kann vorteilhafterweise jeweils ein Druckbegrenzungsventil 7e und 7f vorgesehen sein. In den Behältern 8, 18, 28 oder an der Druckluftzuführung zu diesen Behältern sind Drucksensoren 8a, 18a, 28a vorgesehen, die Ausgangssignale p1, p2, p3 an die Steuereinrichtung 3 ausgeben.

Weiterhin sind an den Ausgang 6b des Lufttrockners 6 ein Rückschlagventil 9 in Sperrrichtung und eine Blende 20 angeschlossen, an die sich ein Regenerationspfad 21 anschließt, der somit bei Betrieb des Kompressors 10 gesperrt ist. Ein als 2/2-Wegeventil ausgelegtes Entlüftungsventil (Spülventil) 5 ist zwischen den Ausgang des Kompressors 4 und einen als Druckluftausgang dienenden Schalldämpfer 22 geschaltet; es weist einen pneumatischen Steuereingang 5a auf, der an den Regenerationspfad 21 angeschlossen ist und bei Druckbeaufschlagung von der gezeigten Sperrstellung in Durchlassstellung umschaltet.

Weiterhin ist ein als 3/2-Wegeventil ausgebildetes Kompressorsteuerungs-Magnetventil 23 zwischen einen pneumatischen Steuereingang 4a des Kompressors 4 und den Schalldämpfer 22 geschaltet. In seiner gezeigten Ruhestellung ist der Steuereingang 4a somit drucklos; bei Ansteuerung des Kompressorsteuerungs-Magnetventils 23 über die Steuereinrichtung 3 legt es den Förderpfad 17 auf den Steuereingang 4a, so dass der Kompressor 4 ausgeschaltet wird. Ein Regenerationssteuerungs-Magnetventil 24 ist ebenfalls als 3/2-Wegeventil ausgebildet und zwischen den Regenerationspfad 21 und den Schalldämpfer 22 geschaltet. In seinem unbestromten Grundzustand legt es den Regenerationspfad 21 somit an den Schalldämpfer 22, so dass der Regenerationspfad 21 drucklos ist, wenn sein Steuereingang von der Steuereinrichtung 3 bestromt wird, schaltet es um und schließt den Regenerationspfad 21 an den Förderpfad 17 an.

Zweckmäßiger Weise können in üblicher Ausführungsform einer Druckluftaufbereitungseinrichtung einige der genannten Komponenten zu einer baulichen Einheit zusammengefasst werden. Zum Beispiel wird eine erfindungsgemäße elektronische Druckluftaufbereitungseinrichtung 1 als bauliche Einheit mit den Komponenten 3, 5, 6, 7, 8a, 9, 12, 16, 17, 18a, 20, 21, 22, 23, 24, 28a realisiert. Diese Druckluftaufbereitungseinrichtung 1 bildet mit dem Kompressor 4 und den Druckluftbehältern 8, 18, 28, 38 ein Fahrzeugsystem 30.

In einer Förderphase (bzw. Füllphase) fördert der Kompressor 4 Druckluft durch den Lufttrockner 6 sowie das Vierkreis-Schutzventil 7 zu den Druckluftbehältern 8, 18, 28, 38.

In einer Regenerationsphase steuert die Steuereinrichtung 3 das Regenerationssteuerungs-Magnetventil 24 an, sodass dieses umschaltet und Druckluft von den Druckluftspeichern 8, 18, 28, 38 über das Vierkreis-Schutzventil 7 und den Förderpfad 17 auf den Regenerationspfad 21 ausgibt. Weiterhin schaltet die Steuereinrichtung 3 das Kompressorsteuerungs-Magnetventil 23 um, so dass es den Steuereingang 4a der Steuereinrichtung 4 mit Druckluft beaufschlagt und diesen somit ausschaltet. Weiterhin wird das Entlüftungsventil 5 selbsttätig durch den unter Druck stehenden Regenerationspfad 21 umgeschaltet und legt den Kompressorausgang bzw, den Eingang des Lufttrockners 6 somit auf den Schalldämpfer 22, so dass diese drucklos sind. Da somit auch der Ausgang 6a des Lufttrockners 6 drucklos ist, schaltet das Rückschlagventil 9 durch , so dass bei sperrendem Rückschlagventil 16 der Lufttrockner 6 in Regenerationsrichtung durchgespült wird zu dem Schalldämpfer 22 und somit an die Umgebung.

Somit wird in der Förderphase die aufgenommene Druckluft im Lufttrockner 6 getrocknet (und gegebenenfalls gereinigt), wodurch der Feuchtegrad im Lufttrockner 6 ansteigt. In der Regenerationsphase wird die im Lufttrockner 6 aufgenommene Feuchtigkeit ganz oder teilweise wieder abgegeben.

Die Steuereinrichtung 3 kann aus den Drucksignalen p1, p2, p3 ermittelte aktuelle Druckwerte mit einem Solldruck ps vergleichen und bei Unterschreiten eines Grenzwertes gegebenenfalls von einer Regenerationsphase auf eine Förderphase umstellen. Weiterhin kann ein Feuchtesensor 12 z. B. in dem Lufttrockner 6 oder in einer an den Lufttrockner 6 angeschlossenen Leitung vorgesehen sein, der ein Messsignal f des Feuchtegrades an die Steuereinrichtung 3 ausgibt. Grundsätzlich ist ein derartiger Feuchtesensor 12 jedoch nicht erforderlich, da die Steuereinrichtung 3 den Feuchtegehalt des Lufttrockners 6 auch selbsttätig abschätzen kann, z. B. aus der Zeitdauer der vorherigen Förderphasen und Regenerationsphasen, der Motordrehzahl und sonstigen Fahrzeugdaten.

Erfindungsgemäß wird der Feuchtegehalt des Lufttrockners 6 nicht nur auf Grundlage des ermittelten oder abgeschätzten aktuellen Feuchtegehaltes eingestellt, sondern ergänzend in Abhängigkeit erstens der Motorauslastung, insbesondere der zur Verfügung stehenden kinetischen Energie des Fahrzeuges 2 und/oder zweitens eines zu erwartenden Druckluftbedarfs.

Bei einem Management in Abhängigkeit der Motorauslastung wird in Zeiträumen bzw. Streckenabschnitten mit geringer Motorauslastung der Kompressor 4 angetrieben, um alle oder einen Teil der Druckspeicher 8, 18, 28, 38 mit einem höheren Druck als einem gewöhnlichen Solldruck aufzuladen. Derartige Phasen sind insbesondere Schubphasen Ts des Nutzfahrzeugs 2 bzw. seines Motors 10, in denen bei eingelegter Motorkupplung das durch die kinetische Energie des Nutzfahrzeugs 2 auf den Motor 10 ausgeübte Schubmoment größer ist als ein vom Fahrer bzw. einer Fahrdynamikregelung angefordertes Motormoment. Derartige Schubphasen Ts können insbesondere Bergab- Fahrten des Nutzfahrzeugs 2 und/oder Abbremsvorgänge sein. Somit wird eine Bremsung des Nutzfahrzeugs 2 über den Motor und den angeschlossenen Kompressor 4 erreicht und in einer Förderphase ein höherer Drucksollwert ps einiger oder aller Druckspeicher 8, 18, 28, 38 eingestellt und diese somit übermäßig befüllt, wobei der Druck p jedoch unterhalb eines oberen Sicherheits-Grenzwertes bleibt. Schubphasen können jeweils aktuell aus einer Drosselklappenstellung des Motors 10 und/oder einer Gaspedalbetätigung und/oder ein das Motormoment beschreibendes Datensignal auf dem Fahrzeugbus des Fahrzeuges 2 ermittelt werden.

Die zusätzlich gespeicherte Druckluft kann zum einen über die an die Druckluftspeicher 8, 18, 28, 38 angeschlossenen Verbraucherkreise genutzt werden. Erfindungsgemäß kann diese oder ein Teil dieser zusätzlichen gespeicherten Druckluft ergänzend auch zu einer übermäßigen Trocknung des Trocknungsmittels 6a eingesetzt werden. Somit wird ein Soll-Feuchtewert abgesenkt und in Regenerationsphasen der Feuchtegrad f weiter als in anderen Phasen abgesenkt. Zwar ist diese übermäßige Trocknung eventuell in anderen Phasen im Verhältnis der hierfür erforderlichen Druckluftmenge bzw. der der Druckluftmenge entsprechenden Energie nicht zweckmäßig, da mit sinkendem Feuchtegrad die Effektivität bzw. der weitere Feuchteabtransport durch die eingeleitete Druckluft sinkt. Erfindungsgemäß wird jedoch erkannt, dass ohnehin kinetische Energie im Übermaß zur Verfügung steht und somit diese kinetische Energie bzw. ein Teil dieser kinetischen Energie als übermäßige Trocknung des Trocknungsmittels des Lufttrockners 6 gespeichert werden kann.

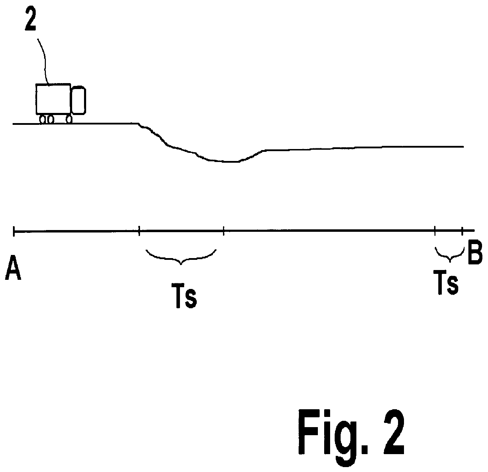

Fig. 2 zeigt beispielhaft und schematisiert eine Fahrtstrecke eines Fahrzeugs 2 zwischen dem Start bei A und dem Ziel bei B. Hierbei sind z.B. auf einer Gefällestrecke und vor dem Stillstand des Nutzfahrzeugs 2 beim Ziel B ein oder mehrere Schubphasen Ts vorhanden. Es kann somit über die Steuereinrichtung 3 in einer Schubphase Ts eine zusätzliche Regenerationsphase bzw. die Verlängerung einer Regenerationsphase durchgeführt werden, wenn eine Schubphase erkannt wurde. Grundsätzlich können die angeschlossenen Verbraucherkreise jederzeit Druckluft verbrauchen. Solange hierdurch der Druck im jeweiligen Druckluftspeicher 8, 18, 28, 38 nicht erheblich abfällt, kann grundsätzlich gleichzeitig zur Nutzung ein beliebiger Schaltzustand der Druckluftaufbereitung, also Fördern, Regenerieren oder Leerlauf eingenommen werden.

Gemäß einer vorteilhaften Weiterbildung können die relevanten Zeiträume oder Streckenabschnitte geringer Motorauslastung bzw. Schubbetriebes bereits vorab ermittelt werden. Dies ist gemäß einer Variante durch Aufnahme von Kartendaten K und Positionsdaten GPS, die von einem GPS-System des Nutzfahrzeugs 2 ermittelt werden, möglich. Somit kann die Steuereinrichtung 3 bzw. eine weitere mit der Steuereinrichtung 3 zusammenwirkende Einrichtung des erfindungsgemäßen Steuersystems voraussichtliche Schubphasen Ts ermitteln und in diesen die erfindungsgemäße übermäßige Trocknung des Trocknungsmittels 6a vornehmen. Als Schubphasen können aus den Kartendaten K gegebenenfalls Gefällestrecken mit nicht zu hohem Gefälle, ein Übergang von Autobahn oder Schnellstraße auf langsamere Straßen sowie der Endabschnitt vor dem Ziel B erkannt werden.

Alternativ oder zusätzlich zu der Ermittlung der Streckenabschnitte geringer Motorauslastung aus Kartendaten können diese auch adaptiv bzw. selbstlernend ermittelt werden, wenn das Nutzfahrzeug 2 Fahrtstrecken oder Teile von Fahrtstrecken wiederholt befährt. Dies ist insbesondere bei Linienbussen und regelmäßig gewisse Fahrtstreckenden fahrenden Lastwagen, z. B. LKWs im Shuttle-Verkehr, vorteilhaft.

Erfindungsgemäß können weiterhin nicht nur Streckenabschnitte unterschiedlicher Motorauslastung, sondern auch Streckenabschnitte mit unterschiedlichem Druckluftbedarf im Voraus ermittelt werden. Diese Streckenabschnitte können insbesondere Bergab-Fahrten mit höherem Gefälle und Stop-and-Go-Abschnitte sein, in denen ein höherer Bremsbedarf auftritt. Weiterhin kann z.B. die Endphase der Fahrtroute als Zeitraum mit erhöhtem Druckluftbedarf eingeschätzt werden, der durch Bremsen, Absatteln, Aufsatteln, sowie Einknickvorgänge bei Reisebussen auftritt. Weiterhin wird auch das Abstellen des Fahrzeuges mit einer größeren gespeicherten Druckluftmenge bzw. höherem Luftdruck in einigen oder allen Druckluftspeichern 8, 18, 28, 38 als vorteilhaft erkannt, damit bei der nachfolgenden Fahrt diese Druckluft wieder zur Verfügung steht, um die Verbraucherkreise entsprechend unter Druck zu setzen und gegebenenfalls Niveauregulierungen durchzuführen. Somit wird zum Fahrtende ein Maximaldruck in einem, einigen oder allen Druckluftspeichern 8, 18, 28, 38 und zum anderen ein sehr niedriger Feuchtgrad im Lufttrockner 6 angestrebt.

Auch diese Ermittlung der Streckenabschnitte mit voraussichtlich erhöhtem Druckluftbedarf kann gemäß den obigen Ausführungen aus den Kartendaten K und Positionsdaten GPS und/oder adaptiv erfolgen. Insbesondere wird das Fahrtende oftmals direkt in das GPS-Steuersystem eingegeben und ist somit bekannt.

Erfindungsgemäß kann ein selbstlernendes Fahrzeug- Energiemanagementsystem nicht nur für dieselben wiederkehrenden Strecken, sondern auch für als ähnlich oder gleichwertig erkannte Strecken Profile der Motorauslastung und/oder des Druckluftverbrauchs schaffen. Hierbei wird z.B. ein Streckenverlauf mit entsprechenden Steigungen und Gefällen, und/oder eine Klassifizierung als innerstädtisch, Landstraße oder Autobahn erstellt und dieser Abfolge der unterschiedlichen Bereiche ein Verbrauchsprofil (Leistungsanforderungsprofil) und/oder ein Regenerationsprofil zugeordnet. Das erfindungsgemäße Energiemanagementsystem optimiert mit diesen Informationen den Energiefluss zwischen den Erzeugern, d.h. dem Motor 10 mitsamt Kompressor 4, den Verbrauchern der angeschlossenen Verbraucherkreise und in einem, einigen oder allen Druckluftspeichern 8, 18, 28, 38 sowie dem erfindungsgemäß als Einrichtung zur Speicherung eines Energie- Äquivalentes bewerteten Lufttrockner 6. Der Lufttrockner 6 wird somit erfindungsgemäß auch wie eine Art "Energiespeicher" betrachtet und funktionell eingebunden, da durch eine übermäßige Trocknung ein Energie-Äquivalent geschaffen wird, wenn die hierzu erforderliche Energie im System hinreichend bzw. im Überfluss vorhanden ist.

Aufgrund der gespeicherte Daten und der Einschätzung des Verbrauchsprofils und/oder des Förderprofils kann erfindungsgemäß somit entschieden werden, wie zum einen einer, mehrere oder alle der Druckluftspeicher 8, 18, 28, 38 aufgeladen oder nachgefüllt werden und zum anderen der Feuchtezustand des Lufttrockners 6 eingestellt wird.

Die Erstellung der Profile bei einem adaptiven Verfahren kann durch Heranziehung von Minimalwerten, Maximalwerten und Durchschnittswerten aus den unterschiedlichen Fahrten erfolgen. Durch wiederkehrende Fahrten kann das Profil jeweils verbessert bzw. an die sich ändernden Umgebungsbedienungen angepasst werden, z.B. mit Hilfe von gleitenden Mittelwerten. So können z.B. auch Staus durch vorübergehende Baustellen erfasst werden.

Erfindungsgemäß können den Streckenprofilen ergänzend Tageszeiten und/oder Wochentage zugeordnet werden.

Weiterhin können zur Ermittlung der Streckenprofile Informationen über den Ladezustand bzw. die Masse des Nutzfahrzeuges 2 herangezogen werden, die zum Teil bereits auf dem fahrzeuginternen Datenbus vorliegen, um das Verbrauchsprofil und/oder das Regenerationsprofil der Strecke noch besser abzuschätzen.

## Patentansprüche

1. Steuereinrichtung (3) für eine Druckluftaufbereitungseinrichtung (1) eines Fahrzeuges (2),
wobei die Steuereinrichtung (3) Ausgangssignale zum Einstellen von Förderphasen und Regenerationsphasen der Druckluftaufbereitungseinrichtung (1) ausgibt,
wobei in einer Förderphase ein Kompressor (4) Druckluft über einen ein Trocknungsmittel (6a) aufweisenden Lufttrockner (6) zu mindestens einem Druckluftspeicher (8, 18, 28, 38) fördert, und
in einer Regenerationsphase Druckluft aus dem mindestens einen Druckluftspeicher (8, 18, 28, 38) durch den Lufttrockner (6) zur Trocknung des Trocknungsmittels (6a) geleitet wird,
**dadurch gekennzeichnet, dass**
die Steuereinrichtung (3) die Regenerationsphasen in Abhängigkeit einer zukünftigen Motorauslastung und/oder eines zukünftigen Druckluftverbrauchs des Fahrzeuges (2) einstellt.

2. Steuereinrichtung nach Anspruch 1, **dadurch gekennzeichnet, dass** sie einen aktuellen Feuchtegrad des Trocknungsmittels (6a) des Lufttrockners (6) ermittelt und den Feuchtegrad durch Ausgabe von Steuersignalen zur Einstellung von Förderphasen und Regenerationsphasen auf einen Soll-Feuchtegrad einstellt.

3. Steuereinrichtung nach Anspruch 2, **dadurch gekennzeichnet, dass** sie den aktuellen Feuchtegrad ermittelt aus einem Feuchtemesssignal (f) eines Feuchtesensors (12) im Lufttrockner (6) oder außerhalb des Lufttrockners und/oder aus einer Bestimmung der Luftmengen der vorangegangenen Förderphasen und Regenerationsphasen.

4. Steuereinrichtung nach Anspruch 2 oder 3, **dadurch gekennzeichnet, dass** sie den Soll-Feuchtegrad ermittelt gemäß einem vorgegebenen Wert und/oder unter Berücksichtigung der zukünftigen Motorauslastung und/oder eines zukünftigen Druckluftverbrauchs des Fahrzeuges (2).

5. Steuereinrichtung nach Anspruch 4, **dadurch gekennzeichnet, dass** sie bei Erkennen eines aktuell niedrigeren und eines zukünftig höheren Druckluftverbrauchs einen niedrigeren Soll-Feuchtegrad einstellt.

6. Steuereinrichtung nach Anspruch 5, **dadurch gekennzeichnet, dass** sie einen zukünftigen Druckluftverbrauch in nachfolgenden Zeiträumen oder Streckenabschnitten ermittelt und bei Erkennen eines nachfolgenden Zeitraums oder Streckenabschnitts mit höherem Druckluftverbrauch zunächst in mindestens einer Schubphase einen höheren Solldruck in dem mindestens einen Druckluftspeicher (8, 18, 28, 38) einstellt als in dem Fall, dass kein nachfolgender Zeitraum oder Streckenabschnitt mit höherem Druckluftverbrauch ermittelt ist, und nachfolgend mindestens eine zusätzliche Regenerationsphase zum Erreichen des niedrigeren Feuchtegrades des Trocknungsmittels (6a) einstellt.

7. Steuereinrichtung nach einem der Ansprüche 4 bis 6, **dadurch gekennzeichnet, dass** sie den Soll-Feuchtegrad in Abhängigkeit einer aktuellen und/oder zukünftigen Motorauslastung einstellt, wobei sie bei Erkennen einer aktuellen oder zukünftigen Schubphase, in der die Bewegungsenergie des Fahrzeugs (2) den Motor (10) und den Kompressor (4) antreibt, einen niedrigeren Soll-Feuchtegrad einstellt als in anderen Phasen.

8. Steuereinrichtung nach Anspruch 7, **dadurch gekennzeichnet, dass** sie ein Druck-Messsignal (p) des aktuellen Luftdrucks in einem, mehreren oder allen Druckluftspeicher (8, 18, 28, 38) aufnimmt und den Luftdruck auf einen Soll-Druck einstellt,
wobei sie in einer Schubphase einen höheren Solldruck als außerhalb einer Schubphase einstellt und vor oder nach der höheren Druckluftbefüllung in mindestens einer Regenerationsphase den Lufttrockner (6) auf einen niedrigeren Feuchtegrad als in anderen Regenerationsphasen einstellt.

9. Steuereinrichtung nach einem der Ansprüche 4 bis 8, **dadurch gekennzeichnet, dass** sie eine Drosselklappenstellung des Motors (10) und/oder eine Gaspedalbetätigung und/oder ein das Motormoment beschreibendes fahrzeuginternes Datensignal als Eingangssignal zur Ermittlung der Motorauslastung aufnimmt, insbesondere zur Ermittlung einer Schubphase oder eine Phase mit geänderter Drosselung der Kraftstoffzufuhr.

10. Steuereinrichtung nach einem der vorherigen Ansprüche, **dadurch gekennzeichnet, dass** sie Förderphasen und Regenerationsphasen einstellt in Abhängigkeit eines ermittelten streckenabhängigen Verbrauchsprofils der Druckluft und/oder in Abhängigkeit eines ermittelten streckenabhängigen Förderprofils der Druckluft.

11. Steuereinrichtung nach Anspruch 10, **dadurch gekennzeichnet, dass** sie aktuelle Positionsdaten ermittelt, z. B. aus einem globalen Positionsbestimmungssystem (GPS) und/oder aus ermittelten Wegstreckendaten, und mit dem streckenabhängigen Verbrauchsprofil und/ oder Förderprofil vergleicht und in Abhängigkeit des Vergleichs die Förderphasen und Regenerationsphasen einstellt.

12. Steuereinrichtung nach Anspruch 11, **dadurch gekennzeichnet, dass** sie das streckenabhängige Verbrauchsprofil der Druckluft und/oder das streckenabhängige Förderprofil der Druckluft ermittelt aus Kartendaten (K), z. B. streckenabhängigen Daten über Steigung und Verkehrsdichte.

13. Steuereinrichtung nach Anspruch 11 oder 12, **dadurch gekennzeichnet, dass** sie das Verbrauchsprofil der Druckluft und/oder das Förderprofil der Druckluft adaptiv aus Messwerten von vorherigen Fahrten, insbesondere Fahrten auf der gleichen Strecke, ermittelt.

14. Druckluftaufbereitungseinrichtung (1), die mindestens aufweist:
eine Steuereinrichtung (3) nach einem der vorherigen Ansprüche, einen Lufttrockner (6), der an einen Kompressor (4) anzuschließen ist und ein Trocknungsmittel (6a) aufweist, und
mindestens eine Ventileinrichtung (5, 7, 16, 19, 23, 24) zum Einstellen von Förderphasen und Regenerationsphasen,
wobei die Steuereinrichtung (3) die mindestens eine Ventileinheit (5, 7, 16, 9, 23, 24) ansteuert und einen Förderzustand des Kompressors (4) schaltet.

15. Fahrzeugsystem (30) das aufweist:
eine Druckluftaufbereitungseinrichtung (1) nach Anspruch 14,
einen von einem Fahrzeugmotor (10) angetriebenen Kompressor (4),
und mindestens einen Druckluftspeicher (8, 18, 28, 38).

16. Fahrzeug (2) mit einem Fahrzeugsystem (30) nach Anspruch 15.

17. Verfahren zur Steuerung einer Druckluftaufbereitungseinrichtung (1) eines Fahrzeuges (2),
wobei in einer Förderphase der Druckluftaufbereitungseinrichtung (1) Druckluft von einem Kompressor (4) über einen Lufttrockner (6) in mindestens einen Druckluftspeicher (8, 18, 28, 38) gefördert wird zur Erhöhung des Luftdrucks (Sp), und in einer Regenerationsphase Druckluft aus dem Druckluftspeicher (8, 18, 28, 38) über den Lufttrockner (6) abgeben wird zur Trocknung des Lufttrockners (6), **dadurch gekennzeichnet, dass**
die Regenerationsphasen in Abhängigkeit einer zukünftigen Motorauslastung und/oder eines zukünftigen Druckluftverbrauchs des Fahrzeuges (2) eingestellt werden.

## Claims

1. Control device (3) for a compressed air preparation device (1) of a vehicle (2),
wherein the control device (3) outputs output signals for adjusting feed phases and regeneration phases of the compressed air preparation device (1), wherein in a feed phase a compressor (4) feeds compressed air to at least one compressed air reservoir (8, 18, 28, 38) via an air dryer (6) having a desiccant (6a), and in a regeneration phase compressed air is conducted from the at least one compressed air reservoir (8, 18, 28, 38) through the air dryer (6) in order to dry the desiccant (6a),
**characterized in that**
the control device (3) sets the regeneration phases as a function of a future engine load and/or a future compressed air consumption value of the vehicle (2).

2. Control device according to Claim 1, **characterized in that** said control device determines a current degree of moisture of the desiccant (6a) of the air dryer (6) and sets the degree of moisture by outputting control signals for adjusting feed phases and regeneration phases to a setpoint degree of moisture.

3. Control device according to Claim 2, **characterized in that** said control device determines the current degree of moisture from a moisture measuring signal (f) of a moisture sensor (12) in the air dryer (6) or outside the air dryer and/or from a determination of the air flow rates of the preceding feed phases and regeneration phases.

4. Control device according to Claim 2 or 3, **characterized in that** said control device determines the setpoint degree of moisture according to a predefined value and/or by taking into account the current or future engine load and/or the current compressed air consumption value or a future compressed air consumption value of the vehicle (2).

5. Control device according to Claim 4, **characterized in that** when a compressed air consumption value which is currently relatively low and a compressed air consumption value which will be relatively high in the future are detected, said control device sets a relatively low setpoint degree of moisture.

6. Control device according to Claim 5, **characterized in that** said control device determines a future compressed air consumption value in subsequent time periods or route sections, and when a subsequent time period or route section with a relatively high compressed air consumption value is detected, said control device sets, initially in at least one overrun phase, a higher setpoint pressure in the at least one compressed air reservoir (8, 18, 28, 38) than in the case in which no subsequent time period or route section with a relatively high compressed air consumption value is determined, and subsequently sets at least one additional regeneration phase for bringing about the relatively low degree of moisture of the desiccant (6a).

7. Control device according to one of Claims 4 to 6, **characterized in that** said control device sets the setpoint degree of moisture as a function of a current and/or future engine load, wherein, when a current or future overrun phase in which the movement energy of the vehicle (2) drives the engine (10) and the compressor (4) is detected, said control device sets a lower setpoint degree of moisture than in other phases.

8. Control device according to Claim 7, **characterized in that** said control device receives a pressure measurement signal (p) of the current air pressure in one, a plurality of, or all the compressed air reservoirs (8, 18, 28, 38) and sets the air pressure to a setpoint pressure, wherein in an overrun phase said control device sets a higher setpoint pressure than outside an overrun phase, and in at least one regeneration phase before or after the charging with relatively high compressed air said control device sets the air dryer (6) to a lower degree of moisture than in other regeneration phases.

9. Control device according to one of Claims 4 to 8, **characterized in that** said control device picks up a throttle valve position of the engine (10) and/or an accelerator pedal activation and/or a vehicle-internal data signal which describes the engine torque as an input signal for determining the engine load, in particular for determining an overrun phase or a phase with changed throttling of the fuel supply.

10. Control device according to one of the preceding claims, **characterized in that** said control device sets feed phases and regeneration phases as a function of a determined route-dependent consumption profile of the compressed air and/or as a function of a determined route-dependent feed profile of the compressed air.

11. Control device according to Claim 10, **characterized in that** said control device determines current position data, for example from a global position determining system (GPS) and/or from determined route data, compares said position data with the route-dependent consumption profile and/or feed profile and sets the feed phases and regeneration phases as a function of the comparison.

12. Control device according to Claim 11, **characterized in that** said control device determines the route-dependent consumption profile of the compressed air and/or the route-dependent feed profile of the compressed air from map data (K), for example route-dependent data relating to the gradient and traffic density.

13. Control device according to Claim 11 or 12, **characterized in that** said control device determines the consumption profile of the compressed air and/or the feed profile of the compressed air adaptively from measured values of previous journeys, in particular journeys on the same route.

14. Compressed air preparation device (1) which has at least:
a control device (3) according to one of the preceding claims, an air dryer (6) which can be connected to a compressor (4) and has a desiccant (6a), and at least one valve device (5, 7, 16, 19, 23, 24) for setting feed phases and regeneration phases,
wherein the control device (3) actuates the at least one valve unit (5, 7, 16, 9, 23, 24) and switches a feed state of the compressor (4).

15. Vehicle system (30) which has:
a compressed air preparation device (1) according to Claim 14,
a compressor (4) which is driven by a vehicle engine (10), and at least one compressed air reservoir (8, 18, 28, 38).

16. Vehicle (2) having a vehicle system (30) according to Claim 15.

17. Method for controlling a compressed air preparation device (1) of a vehicle (2),
wherein in a feed phase of the compressed air preparation device (1) compressed air is fed from a compressor (4) via an air dryer (6) into at least one compressed air reservoir (8, 18, 28, 38) in order to increase the air pressure (Sp), and in a regeneration phase compressed air is output from the compressed air reservoir (8, 18, 28, 38) via the air dryer (6) in order to dry the air dryer (6),
**characterized in that**
the regeneration phases are set as a function of a future engine load and/or a future compressed air consumption value of the vehicle (2).

## Revendications

1. Dispositif de commande (3) pour un dispositif (1) de préparation d'air comprimé sur un véhicule (2),
le dispositif de commande (3) délivrant des signaux de sortie qui ajustent des phases de refoulement et des phases de régénération du dispositif (1) de préparation d'air comprimé,
un compresseur (4) refoulant dans une phase de refoulement de l'air comprimé vers au moins une réserve (8, 18, 28, 38) d'air comprimé à travers un sécheur d'air (6) présentant un moyen de séchage (6a) et
de l'air comprimé provenant de la ou des réserves (8, 18, 28, 38) d'air comprimé étant amené dans une phase de régénération au séchage du moyen de séchage (6a) à travers le sécheur d'air (6),
**caractérisé en ce que**
le dispositif de commande (3) établit des phases de régénération en fonction du taux d'utilisation futur du moteur et/ou de la consommation future du véhicule (2) en air comprimé.

2. Dispositif de commande selon la revendication 1, **caractérisé en ce qu'**il détermine à tout instant le taux d'humidité du moyen de séchage (6a) du sécheur d'air (6) et ajuste le taux d'humidité en délivrant des signaux de commande qui ajustent les phases de refoulement et les phases de régénération à un taux d'humidité de consigne.

3. Dispositif de commande selon la revendication 2, **caractérisé en ce qu'**il détermine à tout instant le taux d'humidité à partir d'un signal (f) de mesure d'humidité d'un capteur d'humidité (12) présent dans le sécheur d'air (6) ou à l'extérieur du sécheur d'air et/ou par détermination des débits d'air des phases précédentes de refoulement et de régénération.

4. Dispositif de commande selon les revendications 2 ou 3, **caractérisé en ce qu'**il détermine le taux d'humidité de consigne en fonction d'une valeur prédéterminée et/ou en tenant compte de du taux d'utilisation actuel ou futur du moteur et/ou de la consommation actuelle ou future du véhicule (2) en air comprimé.

5. Dispositif de commande selon la revendication 4, **caractérisé en ce que** lorsqu'il est constaté que la consommation en air comprimé effective est plus basse et que la consommation future est plus élevée, il établit un taux d'humidité de consigne plus bas.

6. Dispositif de commande selon la revendication 5, **caractérisé en ce qu'**il détermine une consommation future en air comprimé dans des intervalles de temps ou des sections de parcours ultérieurs et **en ce qu'**en cas de détection d'une période ou d'une section de parcours ultérieures dont la consommation en air comprimé est plus grande, la pression de consigne établie d'abord pendant une phase de poussée dans la ou les réserves (8, 18, 28, 38) d'air comprimé est plus élevée qu'au cas où aucune période ou section de parcours ultérieures à consommation en air comprimé plus élevée n'est déterminée, au moins une phase supplémentaire de régénération permettant d'obtenir le degré d'humidité plus bas du moyen de séchage (6a) étant ensuite établie.

7. Dispositif de commande selon l'une des revendications 4 à 6, **caractérisé en ce qu'**il ajuste le degré d'humidité de consigne en fonction du taux d'utilisation actuel et/ou futur du moteur, et en cas de détection d'une phase actuelle ou future de poussée au cours de laquelle l'énergie cinétique du véhicule (2) entraîne le moteur (10) et le compresseur (4), il établit un taux d'humidité de consigne plus bas que dans les autres phases.

8. Dispositif de commande selon la revendication 7, **caractérisé en ce qu'**il reçoit un signal (p) de mesure de pression de la pression actuelle de l'air dans une, dans plusieurs ou dans toutes les réserves (8, 18, 28, 38) d'air comprimé et ajuste la pression d'air à une pression de consigne, et dans une phase de poussée, il établit une pression de consigne plus élevée qu'en dehors d'une phase de poussée, et dans au moins une phase de régénération, avant ou après le remplissage d'air comprimé plus élevé, il ajuste le sécheur d'air (6) à un degré d'humidité plus bas que dans les autres phases de régénération.

9. Dispositif de commande selon l'une des revendications 4 à 8, **caractérisé en ce qu'**il reçoit comme signal d'entrée de détermination du taux d'utilisation du moteur une position de clapet d'étranglement du moteur (10), un actionnement de la pédale d'accélération et/ou un signal de données interne au véhicule et décrivant le couple du moteur, en particulier pour déterminer la présence d'une phase de poussée et d'une phase où l'étranglement de l'amenée de carburant est modifié.

10. Dispositif de commande selon l'une des revendications précédentes, **caractérisé en ce qu'**il établit des phases de refoulement et des phases de régénération en fonction d'un profil de consommation en air comprimé déterminé en fonction du parcours et/ou en fonction d'un profil de refoulement d'air comprimé déterminé en fonction du parcours.

11. Dispositif de commande selon la revendication 10, **caractérisé en ce qu'**il détermine des données de position actuelle par exemple à partir d'un système global de détermination de position (GPS) et/ou de données du chemin parcouru qui ont été déterminées, et les compare avec le profil de consommation dépendant du parcours et/ou avec le profil de refoulement et ajuste les phases de refoulement et les phases de régénération en fonction de la comparaison.

12. Dispositif de commande selon la revendication 11, **caractérisé en ce qu'**il détermine le profil de consommation de l'air comprimé en fonction du parcours et/ou le profil de refoulement de l'air comprimé en fonction du parcours à partir de données cartographiques (K), par exemple des données concernant les pentes et les densités du trafic en fonction du parcours.

13. Dispositif de commande selon les revendications 11 ou 12, **caractérisé en ce qu'**il détermine le profil de consommation d'air comprimé et/ou le profil de refoulement d'air comprimé de manière adaptative à partir de valeurs de mesure de déplacements précédents, et en particulier de déplacements sur le même parcours.

14. Dispositif (1) de préparation d'air comprimé présentant au moins :
un dispositif de commande (3) selon l'une des revendications précédentes,
un sécheur d'air (6) raccordé à un compresseur (4) et présentant un moyen de séchage (6a) et
au moins un dispositif (5, 7, 16, 19, 23, 24) de soupape qui établit des phases de refoulement et des phases de régénération,
le dispositif de commande (3) commandant la ou les unités (5, 7, 16, 19, 23, 24) de soupape et branchant un état de refoulement du compresseur (4).

15. Système (30) de véhicule présentant :
un dispositif (1) de préparation d'air comprimé selon la revendication 14,
un compresseur (4) entraîné par le moteur (10) du véhicule et
au moins une réserve (8, 18, 28, 38) d'air comprimé.

16. Véhicule (2) présentant un système (30) de véhicule selon la revendication 15.

17. Procédé de commande d'un dispositif (1) de préparation d'air comprimé pour un véhicule (2), dans lequel
dans une phase de refoulement du dispositif (1) de préparation d'air comprimé, de l'air comprimé est refoulé à travers un sécheur d'air (6) par un compresseur (4) vers au moins une réserve (8, 18, 28, 38) d'air comprimé pour y augmenter la pression d'air (Sp), et dans une phase de régénération, de l'air comprimé provenant de la réserve (8, 18, 28, 38) d'air comprimé est délivré à travers le sécheur d'air (6) pour sécher le sécheur d'air (6),
**caractérisé en ce que**
les phases de régénération sont établies en fonction du taux d'utilisation futur du moteur et/ou de la consommation future du véhicule (2) en air comprimé.
